# EUROPÄISCHE PATENTSCHRIFT

(11) **EP 3 510 215 B1**
(45) Veröffentlichungstag und Bekanntmachung des Hinweises auf die Patenterteilung: **16.02.2022**
(21) Anmeldenummer: 17758631.0
(22) Anmeldetag: 03.08.2017
(51) Int. Cl.: E04H 4/12, E04H 4/14, E04H 4/16

(54) **MONTAGEHILFE ZUR BEFESTIGUNG VON ARMATUREN AN DER MÜNDUNG EINER ÖFFNUNG**
MOUNTING AID FOR FASTENING FITTINGS TO THE MOUTH OF AN OPENING
AUXILIAIRE DE MONTAGE DESTINÉ À LA FIXATION D'ARMATURES À L'EMBOUCHURE D'UNE OUVERTURE

(30) Priorität: 07.09.2016 CH 11512016
(43) Veröffentlichungstag der Anmeldung: 17.07.2019
(73) Patentinhaber: Rüegg Udo AG, 8737 Gommiswald (CH)
(72) Erfinder: RÜEGG, Lukas, 8737 Gommiswald (CH)
(74) Vertreter: Kieffer, Valentin
(86) Internationale Anmeldenummer: PCT/IB2017/054760
(87) Internationale Veröffentlichungsnummer: WO 2018/047026

(56) Entgegenhaltungen:
- US-A- 3 613 936
- US-A- 3 967 326
- US-A- 4 329 744
- US-A- 4 332 393
- US-A- 4 455 693
- US-A1- 2006 283 792
- US-A1- 2009 320 391
- US-A1- 2016 153 209
- US-B1- 9 394 678

## Beschreibung

Die vorliegende Erfindung betrifft eine Montagehilfe zur Befestigung von Armaturen an der Mündung einer Öffnung gemäss Oberbegriff des Patentanspruchs 1, die Verwendung der Montagehilfe gemäss Anspruch 5 und ein Verfahren zur Befestigung einer Armatur an der Mündung einer Öffnung mit der Montagehilfe gemäss Anspruch 6.

Herkömmliche Schwimmbäder enthalten Dutzende Kubikmeter Wasser, welches natürlich sinnvollerweise nicht komplett gewechselt wird, sobald es nicht mehr sauber ist. Vielmehr werden Schwimmbäder mit Wasseraufbereitungsanlagen verbunden, welche Schwebestoffe, Algen und Schmutz aus dem Wasser filtrieren und eine ganze Reihe von physikochemischen Parametern des Wassers wie pH-Wert, Chlorgehalt, Salzgehalt, usw. überwachen und steuern. Viele Schwimmbäder werden auch mit Heizungssystemen wie Wärmepumpen und Sonnenkollektoren verbunden, um das Wasser aufzuwärmen. Solche Anlagen werden meistens ausserhalb des Schwimmbeckens angebracht, in vielen Fällen in einem separaten speziell dafür erstelltem Technikraum, in welchen das Wasser gepumpt, und wieder zum Schwimmbad zurückgeführt wird. Dies erfolgt über Öffnungen, die in den Wänden oder im Boden des Schwimmbeckens angeordnet sind. Da blosse Öffnungen im Schwimmbecken nicht besonders attraktiv aussehen und unter Umständen auch zu Verletzungen führen können, werden Wassereinlässe und -auslässe meistens mit Armaturen versehen. Die Armaturen tragen nicht nur der Ästhetik des Schwimmbeckens bei, sondern erfüllen auch verschiedene technische Funktionen. Beispielsweise wird über Bodenabläufe das Wasser von einer starken Pumpe angesaugt. Um das Erfassen und Ansaugen von Gegenständen wie Bällen oder anderen Spielsachen oder grossen Schmutzteilen zu vermeiden, welche den Ablauf blockieren oder die Funktion der Pumpe in anderer Weise beeinträchtigen, müssen Bodenabläufe mit einem Ablaufrost versehen werden. Auch Wassereinlässe werden meist mit Düsen versehen, beispielsweise um einen Wasserstrahl zu erzeugen welcher das Wasser in eine bestimmte Richtung führt um z.B. eine gute Durchmischung zu erreichen. Idealerweise können diese Armaturen ohne grossen Aufwand an den Rohrmündungen befestigt werden oder sind sogar lösbar daran befestigt.

Es bestehen bereits mehrere Lösungen für die Fixierung von Armaturen an den Mündungen der Wassereinlässe und -auslässe in Schwimmbecken. In US 2016/0153209 und US 2012/0096635 werden Ablaufroste beschrieben, die einfach durch Anschrauben in der Mündung eines Ablaufs befestigt werden. Dafür werden aber Schrauben gebraucht, die im befestigten Zustand entweder sichtbar sind, was die Ästhetik der Armatur wesentlich beeinträchtigt, oder versteckt sind, wobei im letzteren Fall der Zugang zum Schraubenkopf für das An- und Abschrauben mühsam ist. Diese Armaturen bestehen meistens aus Kunststoff, der bei der Montage leicht beschädigt werden kann und über die Zeit verblasst und/oder verkratzt wird.

In US 2013/0061383, US 6,578,207 und US 9,161,883 werden Armaturen bekannt gemacht, die ein Gewinde aufweisen und in der Rohrmündung ohne zusätzliche Schrauben, direkt eingeschraubt werden können. Dies setzt allerdings voraus, dass die Rohrmündung den passenden Durchmesser und das entsprechende Innengewinde aufweist. Dies stellt kein Problem dar, wenn beide Teile zusammen gekauft werden. Wenn aber eines der zusammengehörenden Teile gewechselt wird, muss der zweite Teil auch gewechselt werden, falls die Gewinde nicht mehr übereinstimmen. Ausserdem altern Gewinde recht stark, insbesondere in nasser Umgebung, wo sie leicht rosten können. Zudem werden Gewinde, insbesondere wenn diese aus Metall sind, häufig mit fettigen oder öligen Substanzen geschmiert damit diese ohne zu verkanten eingeschraubt werden können. Dies ist in Kombination mit Wasser unpassend, da das Wasser dadurch verunreinigt werden kann, was insbesondere in Schwimmbädern nicht wünschenswert ist. Im Lauf der Zeit besteht also die Gefahr, dass sich solche Innengewinde festfressen und die Armaturen entweder nicht mehr entfernt werden können oder beim Entfernen derart beschädigt werden, dass eine Ersatzarmatur nicht mehr eingeschraubt werden kann.

Hinzu kommt, dass die Mündung in welcher das Innengewinde angebracht wird, oft ziemlich früh im Bauprozess des Schwimmbads eingebaut wird, beispielsweise durch Einbetonieren in den Wänden oder dem Boden. Erfahrungsgemäss kann die Mündung während des Rohbaus beschädigt werden, beispielsweise durch Auftreten, Aufsetzen von schweren Baumaterialien, Ansammlung von Sand oder Mörtel im Gewinde usw. Es besteht also die Gefahr, dass das Innengewinde bis zur Fertigstellung bereits derart beschädigt ist, dass die Armatur gar nicht erst eingeschraubt werden kann. Auch ist beim Einbau des Innengewindes möglich, dass dieses gegenüber der Neigung des Bodens oder der Wände nicht genau senkrecht steht, oder falls das Schwimmbad mit Keramikplatten ausgekleidet wird, können diese eine Neigung aufweisen, welche nicht genau Senkrecht zum Gewinde steht, so dass die Armatur nicht ideal auf die Fläche zu liegen kommt. Die genaue Ausrichtung ist insbesondere bei Abläufen ein Problem, da für das bessere Ablaufen des Wassers der Boden meistens geneigt ist und sich die Ablauföffnung am tiefsten Teil des Bodens befinden, wo die Neigungen aus verschiedenen Richtungen zusammenkommen.

In US 2013/0031714 wird eine Armatur für Schwimmbäder beschrieben, die mittels Halteklammern in einer Rohrmündung befestigt werden kann. Die Armatur kann also ohne Schrauben und ohne Gewinde einfach durch Einschieben in die Mündung und die automatische Entfaltung der Halteklammern fest angeordnet werden. Dies setzt allerdings voraus, dass der ganze Umfang der Rohrmündung eine Rille entsprechender Höhe und Breite aufweist, worin sich die Klammern verankern können. Es stellt sich ausserdem die Frage, wie leicht die Armatur wieder entfernt werden kann, und wie gut die Halteklammern dies ertragen. Je stärker die Halteklammern die Armatur an der Rohrmündung befestigen, desto schwieriger wird das Herausziehen und desto stärker werden die Klammern dadurch beschädigt, weil sie komplett umgedreht und verformt werden.

Gemeinsam ist diesen bekannten Fixierungen für Armaturen, dass die Mündung stets zur Armatur passen muss, mit entsprechendem Durchmesser, Form, Gewinde, usw. was insbesondere beim Ersatz der Armaturen oft ein Problem darstellen kann. Ein universaler Adapter zur Befestigung von Armaturen an der Mündung eines Wassereinlasses oder -auslasses ist in US 2016/0153209 vorgestellt. Es handelt sich dabei um einen Adapter mit einem zylindrischen Teil, welcher in jede Rohrmündung mit grösserem Durchmesser eingeschoben werden kann. Der zylindrische Teil des Adapters wird dann mittels radialer Schrauben an der Innenwand der Rohrmündung verankert. Da die Schrauben einfach weiter geschraubt werden können, bis sie gegen die Innenwand der Rohrmündung stossen, kann dieser Adapter an jeder Rohrmündung mit beliebiger Form und Durchmesser wirksam befestigt werden. Ein wesentlicher Nachteil besteht darin, dass der Adapter nur über die Spitzen der Schrauben an der Innenwand des Rohrs befestigt ist. Um eine feste Verankerung zu gewährleisten, müssten also die Schrauben ziemlich fest angeschraubt werden, wobei die Gefahr besteht, die Innenwand des Rohrs zu beschädigen oder sogar zu durchstechen, insbesondere wenn diese aus Kunststoff besteht.

In der US 9,394,678 B1 wird eine Ventildichtung offenbart, wobei ein Element aus elastischem Material zwischen zwei Kompressionselementen angeordnet ist. Bei Bewegung der Kompressionselemente auf einander zu in einer Richtung wird das Element aus elastischem Material komprimiert und in der senkrecht dazu stehenden Richtung ausgedehnt. Das Element aus elastischem Material dehnt sich lateral aus, bis es in Kontakt mit den Seitenwänden der Ventildichtung steht und dadurch Ablaufkanäle schliesst, die entlang der Seitenwände der Ventildichtung verlaufen.

In der US 3,613,936 A wird ein Verschlusszapfen offenbart, wobei ein Dichtring aus elastischem Material um ein konisches Element angeordnet ist und mittels eines Kompressionselements auf das konische Element bewegt wird. Wenn der Dichtring in Richtung des dickeren Endes des konischen Elements bewegt wird, wir er radial nach aussen gedrückt, bis er in Kontakt mit der Innenwand einer Öffnung kommt und der Verschlusszapfen daran kraftschlüssig befestigt wird.

In der US 2006/283792 A1 wird eine Vorrichtung zur Befestigung eines Siebs an einem Wasserablauf vorgestellt, wobei ein Element aus elastischem Material zwischen zwei Kompressionselementen angeordnet ist. Bei Bewegung der Kompressionselemente auf einander zu in einer Richtung wird das Element aus elastischem Material komprimiert und in der senkrecht dazu stehenden Richtung ausgedehnt. Das Element aus elastischem Material dehnt sich lateral aus, bis es in Kontakt mit der Innenwand des Wasserablaufs kommt und das Sieb daran kraftschlüssig befestigt wird.

In der US 2009/320391 A1 wird ein Verschlusszapfen zum Schliessen von Löchern in Gebäuden vorgestellt, wobei ein Element aus elastischem Material zwischen zwei Kompressionselementen angeordnet ist. Bei Bewegung der Kompressionselemente auf einander zu in einer Richtung wird das Element aus elastischem Material komprimiert und in der senkrecht dazu stehenden Richtung ausgedehnt. Das Element aus elastischem Material dehnt sich lateral aus, bis es in Kontakt mit der Innenwand eines Lochs kommt und der Verschlusszapfen daran kraftschlüssig befestigt wird.

In der US 4,455,693 A wird eine zweiteilige Dichtungsanordnung für Abläufe und Rohrverbindungen offenbart, welche eine hülsenartige, zylindrische Dichtung umfasst, die zur Befestigung um ein Rohr herum angepasst ist. Ein zweites Dichtungselement umfasst einen allgemein zylindrischen, hülsenartigen Abschnitt, der so angepasst ist, dass er in das erste Dichtungselement aufgenommen werden kann. Zwei Kompressionsringe sind vorgesehen, die mit Schrauben aufeinander zu bewegt werden können, um die Dichtung und das Dichtungselement zu komprimieren, wobei diese sich lateral ausdehnen und die zweiteilige Dichtungsanordnung mit dem Ablauf oder Rohr dicht verbinden.

In der US 4,332,393 A wird eine Dichtungsanordnung für Abläufe und Rohrverbindungen offenbart, welche eine hülsenförmige, zylindrische Dichtung aufweist, mit einer Vielzahl von ringförmigen Rippen, die an deren Innen- und Aussenflächen angeordnet und in Längsrichtung beabstandet sind. Zwei Kompressionsringe sind vorgesehen, die mit Schrauben aufeinander zu bewegt werden können, um die Dichtung zu komprimieren, wobei diese sich lateral ausdehnt und die Dichtungsanordnung mit dem Ablauf oder Rohr dicht verbindet.

In der US 3,967,326 A wird eine Flanschanordnung zur Installation einer Toilettenvorrichtung offenbart, bestehend aus zwei Kompressionsringen und einer dazwischen angeordneten Dichtung. Die Kompressionsringe sind mit Schrauben aufeinander zu bewegbar, um die Dichtung zu komprimieren, wobei diese sich lateral ausdehnt und die Flanschanordnung am Boden dicht verbindet.

In der US 4,329,744 A wird ein Duschabfluss offenbart, welcher einen zylindrischen Abflusskörper mit einem Flansch, einen Kompressionsring und eine dazwischen angeordnete Dichtung umfasst. Der Kompressionsring ist mit Schrauben in Richtung des Flansches bewegbar, um die Dichtung zu komprimieren, wobei diese sich lateral ausdehnt und ein Ablaufrohr mit dem Duschabfluss dicht verbindet.

Die vorliegende Erfindung stellt sich nunmehr die Aufgabe, eine Montagehilfe der eingangs genannten Art derart zu verbessern, dass die Vorteile der bekannten Fixierungen erhalten bleiben, und die Montagehilfe an der Mündung einer Öffnung unabhängig vom genauen Durchmesser und der Geometrie des Rohrs und von den Eigenschaften der Innenwand, beispielsweise dem Vorhandensein oder dem Zustand eines Gewindes, ohne grossen Aufwand fest, dicht, flexibel und wieder lösbar befestigt werden kann.

Diese Aufgabe lösen eine Montagehilfe zur Befestigung von Armaturen an der Mündung einer Öffnung gemäss Anspruch 1, die Verwendung der Montagehilfe gemäss Anspruch 5 und ein Verfahren zur Befestigung einer Armatur an der Mündung einer Öffnung mit der Montagehilfe gemäss Anspruch 6. Weitere Merkmale und Ausführungsbeispiele gehen aus den abhängigen Ansprüchen hervor und deren Vorteile sind in der nachfolgenden Beschreibung erläutert.

In der Zeichnung zeigt:
- Figur 1a: Seitenansicht der Montagehilfe
- Figur 1b: Seitenansicht der Montagehilfe, komprimiert
- Figur 1c: Seitenansicht der Montagehilfe mit Verbindungselementen
- Figur 2a: Seitenansicht der Montagehilfe, in einer Öffnung eingeschoben
- Figur 2b: Seitenansicht der Montagehilfe, in einer Öffnung verankert
- Figur 3: Seitenansicht der Montagehilfe, in einer Öffnung mit unebenen Innenwänden verankert
- Figur 4a: Seitenansicht der Montagehilfe, in einer breiten Öffnung eingeschoben
- Figur 4b: Seitenansicht der Montagehilfe, in einer breiten Öffnung verankert

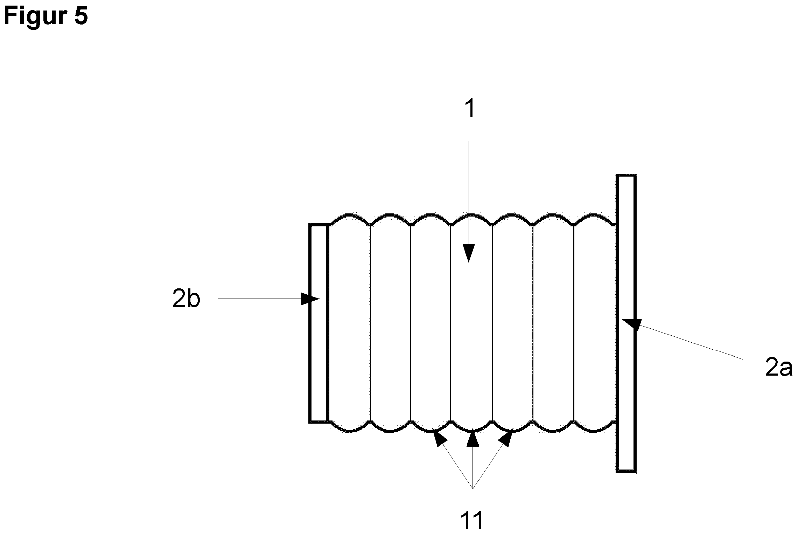

- Figur 5: Seitenansicht der Montagehilfe, mit Befestigungselement mit wellenförmigen Rippen

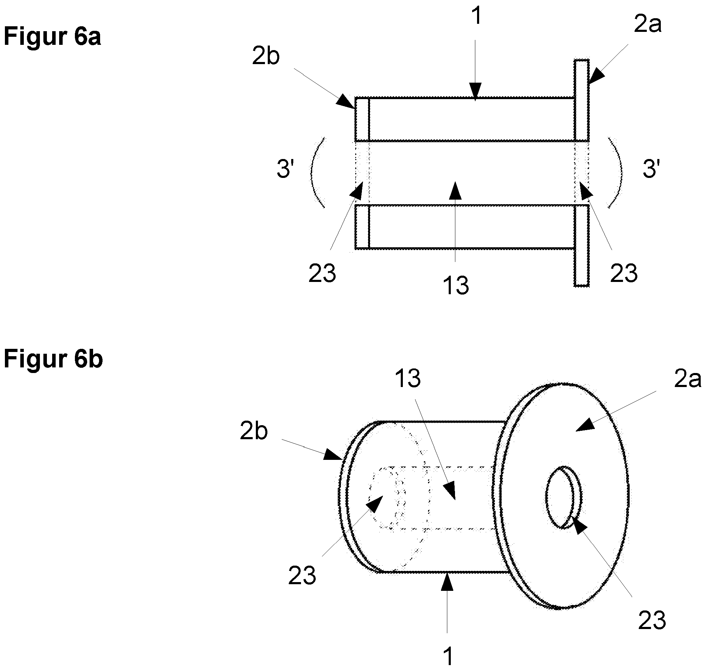

- Figur 6a: Seitenansicht der Montagehilfe mit durchgehender Längsöffnung
- Figur 6b: Perspektivische Ansicht der Montagehilfe mit durchgehender Längsöffnung
- Figur 7a: Seitenansicht der Montagehilfe mit einer breiten durchgehenden Längsöffnung und schmalen Wänden
- Figur 7b: Seitenansicht der Montagehilfe mit einer breiten durchlaufenden Längsöffnung und schmalen Wänden, komprimiert
- Figur 8a: Seitenansicht der Montagehilfe mit durchgehender Längsöffnung, und Verbindungselementen
- Figur 8b: Vorderansicht der Montagehilfe mit gleichmässiger Verteilung der Verbindungselemente über die Kompressionselemente
- Figur 8c: Querschnitt der Montagehilfe mit durchlaufender Längsöffnung und Verbindungselementen, die aus den Kompressionselementen nicht hervorstehen
- Figur 9a: Vorderansicht der Kompressionselemente mit Befestigungsmitteln
- Figur 9b: Vorderansicht der Kompressionselemente mit Befestigungsmitteln
- Figur 10: Seitenansicht der Montagehilfe in einer Öffnung, mit einem Rohr

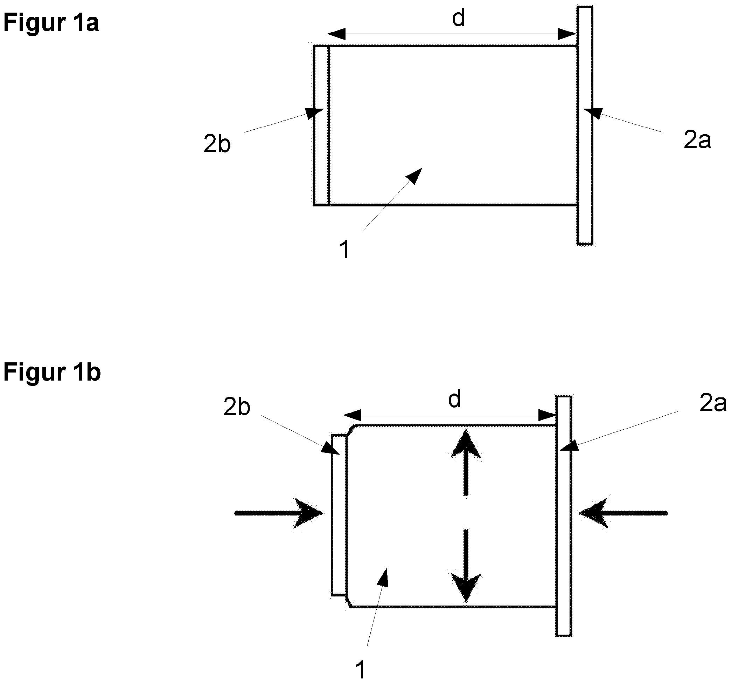

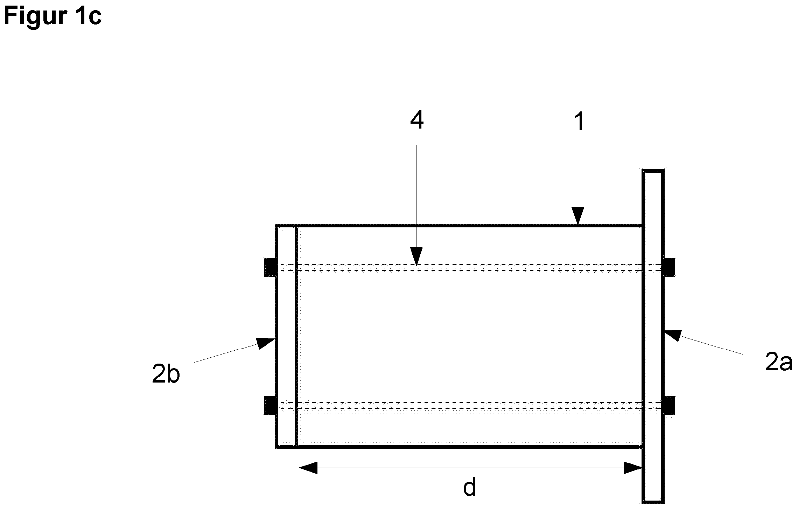

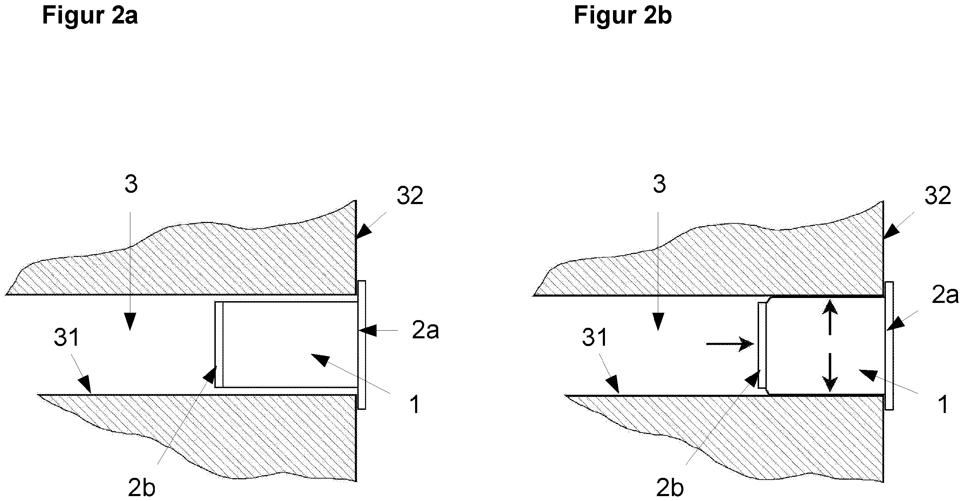

Grundlage der Erfindung ist eine Montagehilfe, welche ohne grossen Aufwand an allen Arten von Öffnungen 3 fest, dicht flexibel und wieder lösbar befestigt werden kann, beispielsweise an einer Rohrmündung 3 oder an die Mündung eines Durchgangs 3 in einer Mauer. Die erfindungsgemässe Montagehilfe besteht aus einem Befestigungselement 1, das zwischen zwei Kompressionselementen 2a-b aus steifem, vorzugsweise rostfreiem Material angeordnet ist (Figur 1a). Das Befestigungselement 1 kann aus mehreren getrennten Teilen von verschiedenen Formen bestehen. Die Kompressionselemente 2a-b sind über mindestens ein Verbindungselement 4 miteinander verbunden (Figur 1c), das eine Schraube ist. Durch die Bewegung des mindestens einen Verbindungselements 4 kann der Abstand d zwischen den zwei Kompressionselementen 2a-b verkleinert werden, damit das Befestigungselement 1 komprimiert werden kann. Die meisten Materialien dehnen sich quer zur Kompressionsrichtung aus, wenn sie komprimiert werden (Figur 1b), wobei die Variation der Breite des Materials quer zur Kompressionsrichtung proportional zur Variation der Länge des Materials in der Kompressionsrichtung ist. Dieses Verhältnis definiert die Poissonzahl v, welche für die meisten Materialien um ca. 0.3 liegt, unabhängig davon, ob sie leicht komprimierbar sind, wie Gummi, oder steif wie Stahl. Die Fixierung der Montagehilfe erfolgt also durch das Einschieben des Befestigungselements in die Öffnung 3 (Figur 2a), die Verringerung des Abstands zwischen den Kompressionselementen mit Hilfe des Verbindungselements und das Ausdehnen des Befestigungselements quer zur Kompressionsrichtung, bis es gegen die Innenwände 31 der Öffnung 3 ankommt und darin fest eingeklemmt ist (Figur 2b). Das Verankern der Montagehilfe erfolgt also unabhängig vom genauen Durchmesser und der Geometrie der Öffnung 3 und von den Eingenschaften der Innenwände 31, beispielsweise vom Vorhandensein oder vom Zustand eines allfälligen Gewindes. Mit der entsprechenden Gestaltung und Material kann die Montagehilfe auch in rechteckigen oder beliebig anders geformten Öffnungen verankert werden. An der Montagehilfe können dann verschiedene Armaturen wie zum Beispiel eine Blende angebracht werden. In den Zeichnungen wurde das Kompressionselement 2a stets grösser als das Kompressionselement 2b und den Durchmesser der Öffnung 3 dargestellt. Dies ist aber lediglich eine mögliche Ausführungsvariante, damit die Montagehilfe in die Öffnung 3 einfach bis das Kompressionselement 2a gegen die Wand 32 der Öffnung 3 stosst eingeschoben werden kann.

Erfindungsgemäß ist das Verbindungselement 4 eine Schraube. Mit Schrauben ist der Abstand d zwischen den zwei Kompressionselementen 2a-b beliebig einstellbar, wobei das Befestigungselement 1 beliebig komprimiert und ausgedehnt werden kann.

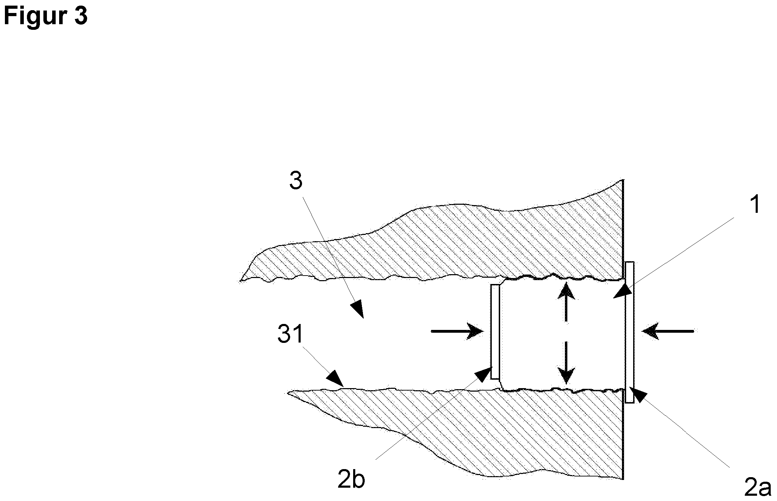

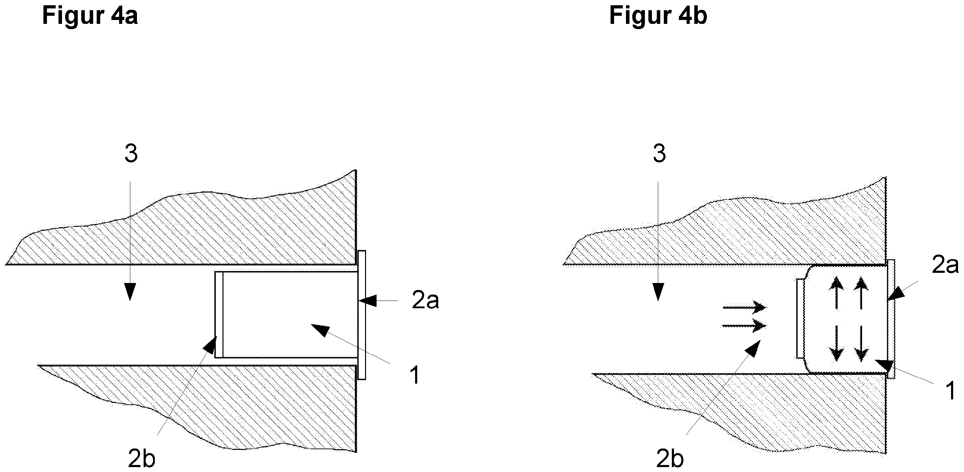

Um eine optimale Verankerung der Montagehilfe in der Öffnung 3 zu gewährleisten, muss das Befestigungselement 1 bestimmte Eigenschaften aufweisen. Erstens muss es aus einem Material bestehen, dass einen möglichst hohen Reibungskoeffizient aufweist oder auch haftend ist. Damit entsteht eine kraftschlüssige Verbindung zwischen dem Befestigungselement 1 und den Seitenwänden 31 der Öffnung 3, was die Montagehilfe also unverrückbar und sicher verankert. Dies ist vor allem bei tiefen Schwimmbecken mit hohem Wasserdruck wesentlich. Falls die Montagehilfe mit der Öffnung 3 dicht verbunden werden muss, z.B. bei einem Bodenablauf, muss das Befestigungselement 1 aus dichtem Material bestehen. Wichtig dabei ist auch, dass dieses Material auch relativ weich ist, damit es sich auf der Seite zu den Innenwänden 31 der Öffnung 3 verformen und an deren Form anpassen kann. Auch wenn die Innenwände 31 der Öffnung 3 ein Gewinde oder eine unebene Oberfläche aufweisen, dürfen idealerweise keine Hohlräume zwischen dem Befestigungselement und den Innenwänden 31 bestehen damit die Montagehilfe dicht ist (Figur 3). Die Montagehilfe ist besonders vorteilhaft anwendbar, wenn das Befestigungselement 1 radial ziemlich weit ausgedehnt werden kann. Somit ist dieselbe Montagehilfe nicht nur für die Befestigung an Öffnungen 3 mit einer geringen Variation von Durchmessern geeignet, sondern an unterschiedliche Grössen adaptierbar. Für Öffnungen 3 mit grösserem Durchmesser können die Kompressionselemente 2a-b einfach stärker aufeinander zu bewegt werden, damit das Befestigungselement 1 stärker komprimiert wird und sich entsprechend radial stärker ausdehnt (Figur 4a-b). Da die Ausdehnung des Materials proportional zu seiner Kompression ist, wird idealerweise ein leicht komprimierbares Material gewählt werden, beispielsweise ein Kunststoff. Unter den Kunststoffen ist z.B. Kautschuk ein leicht verformbares, jedoch beständiges Material, das zusätzlich eine hohe Poissonzahl (ca. 0.5, nämlich) aufweist. Kautschuk kann also mit relativ geringer Kraft ziemlich stark komprimiert werden, und sich in der Querrichtung demzufolge auch ziemlich stark ausdehnen. Weiterhin erfüllt Kautschuk auch alle Erfordernisse an die Weichheit, Dichtheit und den hohen Reibungskoeffizienten, so dass dieses Material für das vorliegende Befestigungselement eine gute Wahl ist.

Um die radiale Ausdehnung und den Druck des Befestigungselements 1 gegen die Innenwände 31 der Öffnung zusätzlich zu erhöhen, kann die Oberfläche des Befestigungselements diverse Formen aufweisen. In einer Ausführungsvariante weist das Befestigungselement 1 eine wellenförmige Oberfläche mit Rippen 11 auf. In anderen Ausführungsvarianten können die Rippen 11 auch spitzig sein oder weitere Formen aufweisen. Auch die Breite und die Höhe der Rippen 11 kann je nach Anforderungen an die Dichtheit oder an die Verankerung in der Öffnung variieren. Wenn das Befestigungselement 1 zwischen den Kompressionselementen 2a-b unter Druck steht, werden die Kompressionskräfte mit dieser speziellen Form im Bereich der Rippen 11 verstärkt, woraufhin sich diese Rippen 11 auch weiter radial ausdehnen. Statt einer einzigen Kontaktfläche zwischen dem Befestigungselement 1 und der Innenwände 31 der Öffnung 3 werden also mehrere kleinere Kontaktflächen gebildet, an welchen die beiden Teile jedoch stärker miteinander verbunden sind. An der Oberfläche kann auch eine Schicht oder einzelne Elemente aus einem anderem beliebig geformten Material angebracht werden, oder die Oberfläche kann beschichtet sein. Dies zusätzliche Schicht kann je nach Anwendungszweck für den besseren Halt oder für eine optimale Dichtung sorgen.

Im Rahmen der Fixierung einer Schwimmbadearmatur wie z. B. einer Düse oder einem Bodenablauf an der Mündung einer Wasserzufuhr bzw. -abfuhr darf die Montagehilfe die Leitung 3 selbstverständlich nicht komplett schliessen. Das Befestigungselement 1 und die Kompressionselemente 2a-b sind deswegen mit mindestens einer inneren Öffnung 13, 23 versehen, damit die Montagehilfe eine durchgehende Längsöffnung 3' aufweist. In einer möglichen Ausführungsvariante sind die zwei Kompressionselemente 2a-b ringförmige Scheiben, die eine kreisförmige zentrale Öffnung 23 aufweisen. In dieser Variante ist das Befestigungselement 1 dann auch mit einer zentralen kreisförmigen Öffnung 13 mit entsprechendem Durchmesser versehen, wodurch das Wasser fliessen kann. Das Befestigungselement 1 weist also die Form eines Zylinders mit dicken Wänden auf. Um den Wasserfluss möglichst wenig zu behindern, wird der Durchmesser der durchgehenden Längsöffnung 3' möglichst gross gewählt.

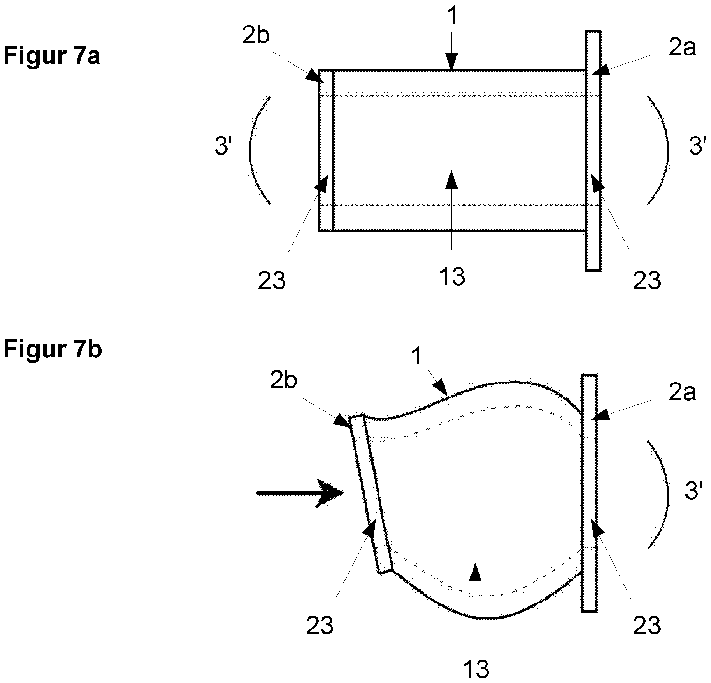

Bei der Wahl des Durchmessers der Öffnung 13 und folglich der Dicke der Wände des Befestigungselements 1 ist zu beachten, dass die Wände unter dem axialen Druck der Kompressionselemente 2a-b nicht einknicken oder sich wellen, insbesondere falls sie aus leicht verformbarem Kunststoff wie Kautschuk bestehen (Figur 7a-b). Diese Gefahr besteht, wenn das Seitenverhältnis der Wände (Länge zu Dicke) zu hoch ist, d.h., wenn die Wände zu lang oder zu dünn sind. Mit einem niedrigem Seitenverhältnis kann die Gefahr der Verformung reduziert werden.

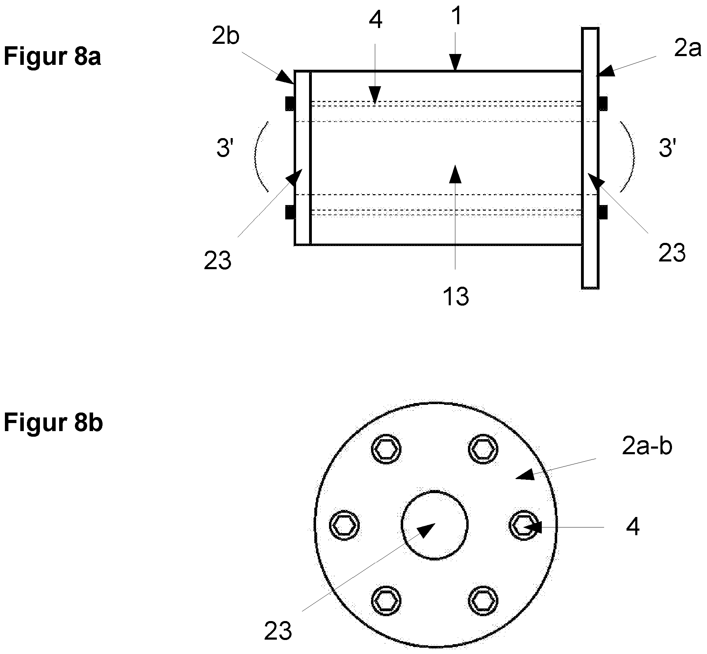

Durch eine geeignete Anordnung der Verbindungselemente 4, welche die beiden Kompressionselemente 2a-b miteinander verbinden, kann die Gefahr einer unerwünschten Verformung der Wände des Befestigungselements 1 effektiv behoben werden. Erfindungsgemäß gehen die Verbindungselemente 4 durch das Befestigungselement 1 durch (Figur 8a). Dies hat erstens den Vorteil, dass die Verbindungselemente 4 sich nicht in der durchlaufenden Längsöffnung 3' der Montagehilfe befinden und den Wasserfluss nicht zusätzlich behindern. Zweitens können in dieser Variante die Verbindungselemente 4 dazu dienen, die unerwünschte Verformung des Befestigungselements 1 zu vermeiden. Wichtig ist, dass die Verbindungselemente 4 über die Fläche der Kompressionselemente 2a-b gleichmässig verteilt sind, damit diese jederzeit parallel gehalten werden und das Befestigungselement 1 gleichmässig komprimieren (Figur 8b). Zur besseren Vermeidung der Verformung sind die Verbindungselemente 4 gleichmässig am Umfang der Montagehilfe angeordnet, wobei bei kleinen Durchmessern und bei einer geringen Anforderung an die Stabilität nur zwei oder drei Verbindungselemente 4radial angeordnet sein können. Bei grösseren Durchmessern können dies aber natürlich auch vier, fünf oder noch mehr Verbindungselemente 4 sein.

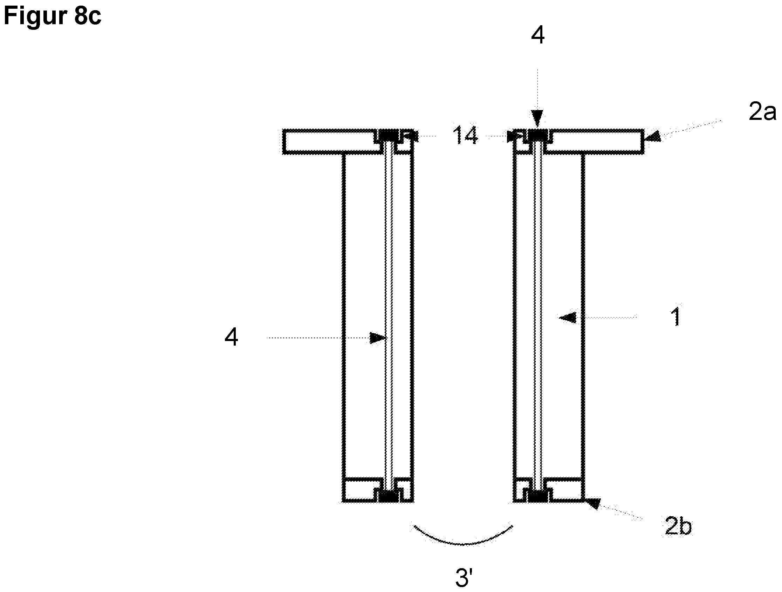

In einer möglichen Ausführungsvariante stehen die Verbindungselemente 4, z.B. die Schraubenköpfe, aus den Kompressionselementen nicht hervor (Figur 8c). Dafür können die Verbindungselemente beispielsweise in einer Vertiefung 14 angeordnet werden oder Senkschrauben sein.

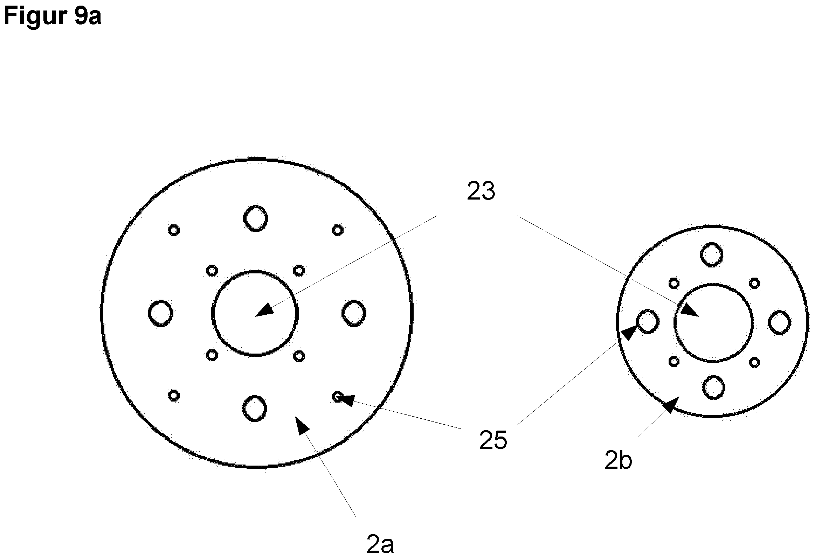

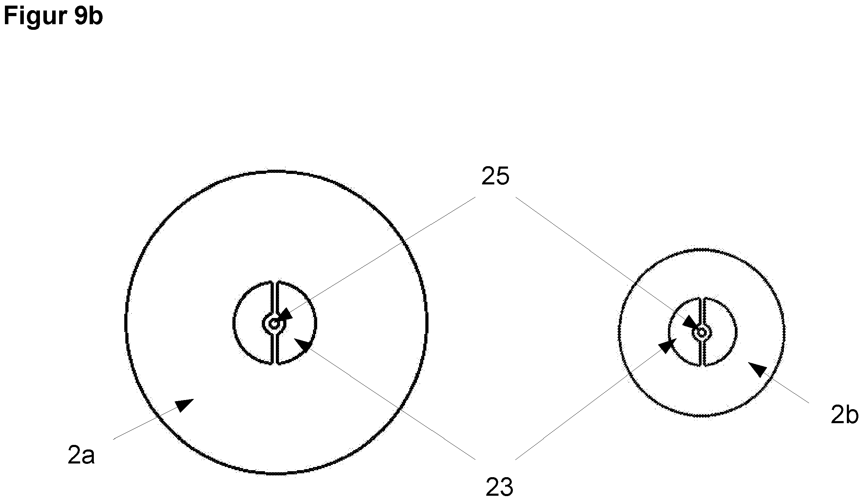

Zur Befestigung von Armaturen an einer nicht erfindungsgemäßen Montagehilfe weisen die Kompressionselemente 2a-b einen oder mehrere Befestigungsmittel 25 auf, beispielsweise Löcher 25 verschiedener Grösse, woran eine Armatur mit Schrauben befestigt werden kann (Figur 9a). In einer Ausführungsvariante können derartige Löcher 25 ein Gewinde aufweisen, damit eine Schraube auch direkt ohne Bolzen daran geschraubt werden kann. Erfindungsgemäss ist vorgesehen, dass die Befestigungsmittel sich in der inneren Öffnung 23 befinden (Figur 9b). Somit können Armaturen beispielsweise auch zentral angebracht, oder teilweise in der durchlaufenden Längsöffnung eingeschoben und am hinteren Kompressionselement 2b befestigt werden.

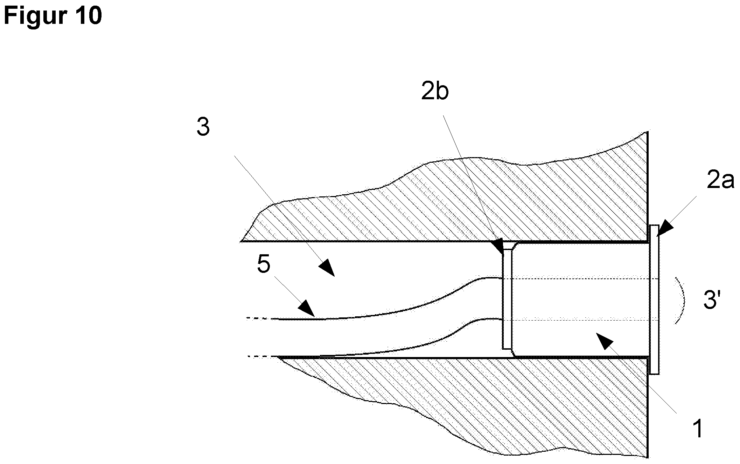

In einer weiteren Ausführungsvariante der Montagehilfe wird daran ein Rohr 5 angebracht, wie beispielsweise in Figur 10 gezeigt. Diese Ausführungsvariante kann z.B. im Rahmen einer Instandsetzung eines Schwimmbeckens eingesetzt werden, bei welcher die bestehenden Wasserzufuhren oder Wasserabfuhren beschädigt und nicht mehr dicht sind. Mit der Montagehilfe kann ein neues Rohr 5 in der bestehenden Öffnung 3 eingelegt werden, und über die Montagehilfe mit dem Schwimmbecken fest und dicht verbunden werden. Ein grosser Vorteil dieser Methode ist, dass der bestehende Aufbau, d.h. Schwimmbecken und eingemauerte Leitungen in den Wänden des Schwimmbeckens, kaum geändert werden müssen: Die vorliegende Montagehilfe kann einfach darauf bzw. darin montiert werden.

## Patentansprüche

1. Montagehilfe zur Befestigung von Armaturen an der Mündung einer Öffnung (3) mit einem Befestigungselement (1) aus elastischem Material, einem vorderen Kompressionselement (2a) und einem hinteren Kompressionselement (2b), wobei
das Befestigungselement (1) zwischen den zwei Kompressionselementen (2ab) angeordnet ist,
die Kompressionselemente (2a-b) mittels mindestens einer Schraube (4) miteinander verbunden sind und der Abstand zwischen den Kompressionselementen (2a-b) durch Betätigung der mindestens einen Schraube (4) verändert wird,
das Befestigungselement (1) bei Bewegung der Kompressionselemente (2a-b) auf einander zu in einer Richtung komprimiert, und in der senkrecht dazu stehenden Richtung ausgedehnt wird,
das Befestigungselement (1) und die Kompressionselemente (2a-b) mindestens eine Innenöffnung (13, 23) aufweisen, so dass die Montagehilfe mindestens eine durchgehende Längsöffnung (3') zwischen den Kompressionselementen (2a-b) aufweist,
die mindestens eine Schraube (4) sich mindestens teilweise im Befestigungselement (1) befindet, mit dem Schraubenkopf am vorderen Kompressionselement (2a),
**dadurch gekennzeichnet, dass**
das hintere Kompressionselement (2b) in der Innenöffnung (23) ein Befestigungsmittel (25) zur Befestigung einer Armatur aufweist.

2. Montagehilfe nach Anspruch 1
**dadurch gekennzeichnet, dass**
das Befestigungselement (1) aus Kautschuk besteht.

3. Montagehilfe nach Anspruch 1
**dadurch gekennzeichnet, dass**
das Befestigungselement (1) Rippen (11) aufweist.

4. Montagehilfe nach Anspruch 1
**dadurch gekennzeichnet, dass**
die Kompressionselemente (2a-b) aus steifem und rostfreiem Material bestehen.

5. Verwendung einer Montagehilfe nach Anspruch 1
als Verankerungsmittel für eine Armatur an der Mündung einer Öffnung (3).

6. Verfahren zur Befestigung einer Armatur an der Mündung einer Öffnung (3) mit der Montagehilfe gemäss Anspruch 1,
umfassend die folgenden Schritte:
- Einschieben des Befestigungselements (1) in die Öffnung (3);
- Anziehen der mindestens einen Schraube (4), bis das Befestigungselement (1) gegen die Innenwände (31) der Öffnung (3) ankommt und darin fest eingeklemmt ist;
- Befestigung der Armatur ans Befestigungsmittel (25).

## Claims

1. Mounting aid for fastening fittings to the mouth of an opening (3) with a fastening element (1) made of elastic material, a front compression element (2a) and a rear compression element (2b), wherein
the fastening element (1) is arranged between the two compression elements (2a-b),
the compression elements (2a-b) are connected to one another by means of at least one screw (4) and the distance between the compression elements (2a-b) is changed by actuating the at least one screw (4),
the fastening element (1) is compressed in one direction when the compression elements (2a-b) are moved towards one another and is expanded in the direction perpendicular thereto,
the fastening element (1) and the compression elements (2a-b) have at least one inner opening (13, 23) so that the mounting aid has at least one continuous longitudinal opening (3 ') between the compression elements (2a-b),
the at least one screw (4) is located at least partially in the fastening element (1), with the screw head on the front compression element (2a),
**characterized in that**
the rear compression element (2b) has a fastening means (25) in the inner opening (23) for fastening a fitting.

2. Mounting aid according to claim 1
**characterized in that**
the fastening element (1) is made of rubber.

3. Mounting aid according to claim 1
**characterized in that**
the fastening element (1) has ribs (11).

4. Mounting aid according to claim 1
**characterized in that**
the compression elements (2a-b) consist of rigid and rustproof material.

5. Use of a mounting aid according to claim 1
as anchoring means for a fitting at the mouth of an opening (3).

6. Method for attaching a fitting to the mouth of an opening (3) with the mounting aid according to claim 1,
comprising the following steps:
- insertion of the fastening element (1) into the opening (3);
- tightening the at least one screw (4) until the fastening element (1) comes against the inner walls (31) of the opening (3) and is firmly clamped therein;
- attachment of the fitting to the fastening means (25).

## Revendications

1. Aide au montage pour fixer des accessoires à l'embouchure d'un orifice (3) avec un élément de fixation (1) en matériau élastique, un élément de compression avant (2a) et un élément de compression arrière (2b), dans laquelle
l'élément de fixation (1) est disposé entre les deux éléments de compression (2a-b),
les éléments de compression (2a-b) sont reliés entre eux au moyen d'au moins une vis (4) et la distance entre les éléments de compression (2a-b) est modifiée en actionnant la au moins une vis (4),
l'élément de fixation (1) est comprimé dans une direction lorsque les éléments de compression (2a-b) sont rapprochés l'un de l'autre et se dilate dans la direction perpendiculaire,
l'élément de fixation (1) et les éléments de compression (2a-b) présentent au moins un orifice intérieur (13, 23) de sorte que l'aide au montage présente au moins un orifice longitudinal continu (3') entre les éléments de compression (2a-b),
la au moins une vis (4) est au moins partiellement située dans l'élément de fixation (1), avec la tête de vis à l'élément de compression avant (2a),
**caractérisée en ce que**
l'élément de compression arrière (2b) présente dans l'orifice intérieur (23) un moyen de fixation (25) pour fixer un accessoire.

2. Aide au montage selon la revendication 1
**caractérisée en ce que**
l'élément de fixation (1) est en caoutchouc.

3. Aide au montage selon la revendication 1
**caractérisée en ce que**
l'élément de fixation (1) présente des nervures (11).

4. Aide au montage selon la revendication 1
**caractérisé en ce que**
les éléments de compression (2a-b) sont constitués d'un matériau rigide et inoxydable.

5. Utilisation d'une aide au montage selon la revendication 1 comme moyen d'ancrage d'un accessoire à l'embouchure d'un orifice (3).

6. Procédé de fixation d'un accessoire à l'embouchure d'un orifice (3) avec l'aide au montage selon la revendication 1,
comprenant les étapes suivantes :
- insertion de l'élément de fixation (1) dans l'orifice (3) ;
- serrage de la au moins une vis (4) jusqu'à ce que l'élément de fixation (1) vienne contre les parois intérieures (31) de l'orifice (3) et y soit fermement bloqué ;
- fixation de l'accessoire au moyen de fixation (25).
